(19) Europäisches Patentamt European Patent Office Office européen des brevets

(11) **EP 3 511 368 B1**

(12) **EUROPEAN PATENT SPECIFICATION**

(45) Date of publication and mention of the grant of the patent:
**28.04.2021  Bulletin 2021/17**

(51) Int Cl.:
***C08J 5/18*** (2006.01)

(21) Application number: **18151932.3**

(22) Date of filing: **16.01.2018**

(54) **PROCESS FOR PRODUCING A POROUS POLYMER COMPOSITION, POROUS POLYMER COMPOSITION AND ARTICLE INCLUDING THE POROUS POLYMER COMPOSITION**

VERFAHREN ZUR HERSTELLUNG EINER PORÖSEN POLYMERZUSAMMENSETZUNG, PORÖSE POLYMERZUSAMMENSETZUNG UND ARTIKEL MIT DER PORÖSEN POLYMERZUSAMMENSETZUNG

PROCÉDÉ DE PRODUCTION D'UNE COMPOSITION POLYMÈRE POREUSE, COMPOSITION POLYMÈRE POREUSE ET ARTICLE COMPRENANT LA COMPOSITION POLYMÈRE POREUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.07.2019  Bulletin 2019/29**

(73) Proprietor: **Karlsruher Institut für Technologie 76131 Karlsruhe (DE)**

(72) Inventors:
  • **Syurik, Julia**
    **76185 Karlsruhe (DE)**
  • **Hölscher, Hendrik**
    **76356 Weingarten (DE)**

(74) Representative: **Müller-Boré & Partner Patentanwälte PartG mbB Friedenheimer Brücke 21 80639 München (DE)**

(56) References cited:
  **EP-A1- 3 153 230        US-A- 4 384 023
  US-A1- 2006 032 813     US-A1- 2011 294 016**

  • SYURIK ET AL.: "Bio-inspired, large scale, highly scattering films for nanoparticle-alternative white surfaces", SCIENTIFIC REPORTS, 21 April 2017 (2017-04-21), pages 1-11, XP002782691, DOI: 10.1038/srep46637
  • G.K. EL'YASHEVICH ET AL.: "Optical transmission of porous polyolefin films in immersion media", JOURNAL OF OPTICAL TECHNOLOGY, vol. 84, no. 7, July 2017 (2017-07), pages 481-485, XP002782690,

**Description**

The present invention relates to a process for producing a porous polymer composition, a porous polymer composition and an article including the porous polymer composition.

White is the most popular color for today's industrial products. Being the essential color for interiors, white pigments are widely found in plastics, inks, and paints. Additionally, they are frequently used in cosmetics and even food. In many of these products, a white color is achieved by incorporating titanium dioxide ($TiO_2$) particles which, due to their high refractive index n of about 2.6, effectively scatter incoming visible light. However, fabricating an article having $TiO_2$ dispersed therein and/or having a surface coated with $TiO_2$ causes some issues: (i) an additional operational step that increases costs, (ii) complicated disposal procedures due to possible environmental harm due to $TiO_2$ particles, (iii) pulmonary inflammation effects, and (iv) suspected health issues. Thus, there is a need for an alternative to $TiO_2$, in particular a need for a polymer composition that is of white color and which can be used as a colorant, i.e. as a polymer composition that can be used as a white pigment.

Accordingly, the technical problem underlying the present invention is to provide a polymer composition that is of white color and that can be used for coloring, and a process for producing the polymer composition.

According to the present invention, the solution to the above technical problem is achieved by providing the subject matter as characterized in the claims.

In particular, in a first aspect, the present invention relates to a process for producing a porous polymer composition, comprising the steps of

(A) providing a substrate;
(B) preparing a polymer solution containing a polymer composition, a solvent, and optionally a non-solvent, wherein the polymer composition has a weight average molecular weight $M_w$ of 80 to 400 kg/mol, a number average molecular weight $M_n$ of 60 to 200 kg/mol, and a polydispersity index D of 1.1 to 2; and
(C) forming a film of the polymer solution on the substrate; and
(D) evaporating the solvent from the film of the polymer solution, thereby obtaining the porous polymer composition, wherein the polymer composition comprises poly(methyl methacrylate).

The above-defined process provides a porous polymer composition of white appearance. Even films of the porous polymer composition that have a thickness of merely 5 $\mu$m reflect and scatter up to 80% of the incident light. Due to the specific structure of the porous polymer composition, the transport mean free path in the porous polymer composition may be even shorter than the transport mean free path of photonic glass and cellulose-based nanostructures, for example. Upon wetting with an aqueous liquid, the porous polymer composition according to the present invention loses its white color and turns translucent or transparent, wherein the original whiteness can be fully restored by redrying the porous polymer composition.

In step (A) of the process according to the present invention, a substrate is provided. The substrate is not particularly limited. Preferably, a planar substrate is used. Substrates that may be used in the process of the present invention include, for example, substrates made of glass, a polymer, an alloy, a metal and/or a metal oxide. According to a preferred embodiment, the planar substrate is a conveyor belt.

In step (B) of the process for producing a porous polymer composition according to the present invention, a polymer solution is prepared. The polymer solution comprises a polymer composition, a solvent, and optionally a non-solvent. It is preferred that the polymer solution consists of a polymer composition, a solvent, and optionally a non-solvent.

The polymer composition that is included in the polymer solution prepared in step (B) has a weight average molecular weight $M_w$ of 80 to 400 kg/mol, a number average molecular weight $M_n$ of 60 to 200 kg/mol, and a polydispersity index D of 1.1 to 2. According to the present invention, the weight average molecular weight $M_w$ and the number average molecular weight $M_n$ can be determined by gel permeation chromatography using toluene as an eluent. Moreover, the polydispersity index D is defined as the ratio of the weight average molecular weight $M_w$ to the number average molecular weight $M_n$ (D = $M_w/M_n$). Since $M_w$, $M_n$ and D fall within the above ranges, the porous polymer composition obtained by the above process has a specific microstructure comprising a plurality of interconnected nodes and a plurality of rod-shaped elements, as explained in detail below. Due to this specific structure, a porous polymer composition of excellent whiteness can be obtained.

Preferably, the weight average molecular weight $M_w$ is 100 to 350 kg/mol, more preferably 110 to 300 kg/mol, especially preferably 120 to 200 kg/mol. Moreover, the number average molecular weight $M_n$ is preferably 70 to 150 kg/mol, more preferably 75 to 110 kg/mol, especially preferably 85 to 95 kg/mol. Furthermore, it is preferred that the polydispersity index D is 1.2 to 1.8, more preferably 1.3 to 1.7, especially preferably 1.4 to 1.6.

According to a preferred embodiment of the present invention, the polymer composition is thermoplastic, i.e. the polymer composition consists of one of several thermoplastic polymers. It is particularly preferred that the polymer composition is a thermoplastic polymer.

In view of the optical properties of the porous polymer film according to the present invention, a high refractive index n is preferable. In particular, the polymer composition preferably has a refractive index n of at least 1.40. Although there is no upper limit of the refractive index, it may fall within the ranges of 1.45 to 1.8 and preferably 1.46 to 1.7. Other possible ranges for the above refractive index n are, for example, 1.46 to 1.59, 1.47 to 1.55, or 1.48 to 1.52. The refractive index n refers to light having a wavelength of 600 nm. The refractive index can be determined in accordance with DIN EN ISO 489:1999-08.

The solvent contained in the polymer solution is not particularly limited and includes any liquid that is suited for dissolving the polymer composition. Preferably, the solvent used in step (B) of the process according to the present invention can dissolve at least 5 g/100 ml, preferably at least 7 g/100 ml more preferably at least 10 g/100 ml of the polymer composition at a temperature of 25°C and a pressure of 1013 hPa. It is preferred that the solvent has a lower polarity than the non-solvent and/or that the solvent is non-polar. According to a preferred embodiment of the present invention, the solvent is selected from the group consisting of acetone, ethylacetate, dichloromethane, dimethylsulfoxide, anisole, chloroform and combinations thereof. The polymer solution prepared in step (B) of the above process preferably contains a non-solvent. The non-solvent is not particularly limited and includes all liquids that are not able to dissolve the polymer composition. Preferably, the non-solvent is able to dissolve at most 0.05 g/ 100 ml, more preferably at most 0.01 g/100 ml and particularly preferably at most 0.005 g/100 ml of the polymer composition at a temperature of 20°C and a pressure of 1013 hPa. It is preferred that the non-solvent has a higher polarity than the solvent and/or that the non-solvent is polar. According to the present invention, suitable non-solvents include water, isopropanol and combinations thereof, wherein water ($H_2O$) is preferred. Moreover, the non-solvent that is used in step (B) is at least partially, and preferably fully miscible with the solvent at a temperature of 20°C and a pressure of 1013 hPa.

According to a preferred embodiment of the present invention, the concentration of the polymer composition in the polymer solution is 0.2 to 6 g/ 100 ml, preferably 0.3 to 1 g/100 ml at the end of step (B). Moreover, the concentration of the non-solvent, if contained, at the end of step (B) is at most 4 wt.-%, preferably at most 2 wt.-%, particularly preferably at most 1 wt.-%. Preferred lower limits of the non-solvent concentration are 0.01 wt.-% and 0.05 wt.-%.

According to the present invention, the polymer composition contained in the polymer solution comprises poly(methyl methacrylate)

When the polymer composition includes or consists of poly(methyl methacrylate) (PMMA), the solvent preferably includes or consists of acetone.

According to a preferred embodiment of the present invention, step (B) comprises the steps of

(B1) preparing a raw polymer solution of a raw polymer composition by dissolving the raw polymer composition in the solvent;
(B2) ultrasonicating the raw polymer solution, and optionally
(B3) adding the non-solvent to the ultrasonicated raw polymer solution, thereby obtaining the polymer solution.

Step (B1) (as well as step (B)) is not particularly limited and can, for example, be carried out by mixing the (raw) polymer composition with the solvent, for example by agitating/stirring the mixture of the (raw) polymer composition and the solvent, until the (raw) polymer composition is completely dissolved. The same as outlined above with respect to the polymer composition also applies to the raw polymer composition with the provision that the raw polymer composition may have a weight average molecular weight $M_w$, a number average molecular weight $M_n$ and/or a polydispersity index D which is/are different from $M_w$, $M_n$ and D of the polymer composition as defined above.

In step (B2) the raw polymer solution is ultrasonicated. That is, the raw polymer solution is treated with ultrasound. By virtue of ultrasonication, the number average molecular weight $M_n$ and the mass average molecular weight $M_w$ of the raw polymer composition in the raw polymer solution can be adjusted so as to fall within the above-defined ranges. In particular, ultrasonication leads to a reduction of the weight average molecular weight $M_w$, number average molecular weight $M_n$ and polydispersity index D of the raw polymer composition.

In step (B3), the non-solvent is optionally added to the ultrasonicated raw polymer solution. In case no non-solvent is added, that is in case step (B3) is omitted, the polymer solution prepared in step (B) is obtained directly after step (B2). Step (B3) may be carried out before, after and/or simultaneously with step (B2).

According to a preferred embodiment of the present invention, ultrasonicating in step (B2) is carried out at a frequency falling within the range of 10 to 40 kHz. According to the present invention, the ultrasound can have only one single of the above-cited frequencies or a plurality of the above-cited frequencies. Moreover, ultrasonicating in step (B2) is preferably carried out at a power rating of 60 to 135 W, more preferably 80 to 115 W with a horn sonicator (Qsonica Q125, Qsonica LLC). At these power ratings, the ultrasound power can be safely dissipated by the equipment/apparatus for ultrasonicating. It is further preferred that ultrasonicating in step (B2) is carried out for a duration of 1 to 7 hours, more preferably 2 to 4 hours.

When the above conditions for ultrasonicating in step (B2) are met, it can be more securely guaranteed that $M_w$, $M_n$ and D of the polymer composition at the end of step (B2) fall within the prescribed ranges for $M_w$, $M_n$ and D as

defined above.

In a preferred embodiment of the process according to the present invention, step (B2) is carried out at a temperature of 0 to 15°C. In other words, it is preferred that the temperature of the raw polymer solution during step (B2) falls within the range of 0 to 15°C, preferably 5 to 10°C. When the temperature falls within the above range, evaporation of the solvent and/or non-solvent can be reduced to a minimum and premature precipitation of the polymer composition before step (C) can be avoided.

In step (C) of the process for producing a porous polymer composition according to the present invention, a film of the polymer solution (polymer solution film) is formed on the substrate. The polymer solution film may be formed by any known means for forming a film, such as casting, spraying, dip coating or combinations thereof.

The thickness of the polymer solution film is not particularly limited. According to a preferred embodiment of the present invention, the thickness of the polymer solution film at the end of step (C) is at least 0.2 $\mu$m, preferably at least 1.0 $\mu$m. When the polymer solution has such a thickness, sufficient intensity of the white color of the resulting polymer composition can be obtained.

In step (D) of the process according to the present invention, the solvent is evaporated from the polymer solution film, whereby the porous polymer composition according to the present invention is obtained. The conditions during step (D) are not particularly limited, as long as the solvent evaporates. Preferably, the temperature during step (D) is 5 to 100°C, more preferably 15 to 80°C, particularly preferably 20 to 40°C. Preferably, the pressure during step (D) is 0.1 to 2000 hPa, more preferably 0.1 to 1500 hPa, particularly preferably 0.1 to 1013 hPa.

It is further preferred that the polymer solution film is exposed to a gaseous atmosphere containing a non-solvent in step (D). The same as outlined above with respect to the non-solvent of step (B) also applies to the non-solvent of step (D). Preferably, the non-solvent is the same as used in step (B), and water is an especially preferred non-solvent. Particularly preferably, the polymer solution film is exposed to an atmosphere of air having a relative humidity of 5 to 99%, more preferably 15 to 80%, further preferably 25 to 50% in step (D).

According to a preferred embodiment, the process for producing a porous polymer composition according to the present invention further comprises the step of

(E) removing the porous polymer composition from the substrate.

Step (E) is not particularly limited. For instance, the porous polymer composition can be peeled off by hand or removed by making use of a knife.

After step (D) and/or (E), a drying step may be carried out. The drying step makes it possible to remove residual non-solvent, if present.

In a further aspect, the present invention relates to a porous polymer composition having a microstructure comprising a plurality of interconnected nodes which have an average diameter of 150 to 1000 nm and a plurality of rod-shaped elements (rod-like structures) which have an average diameter of at least 40 nm and an average length of at least 700 nm.

The above explanations with respect to the process for producing a porous polymer composition according to the present invention also apply to the porous polymer composition according to the present invention. The porous polymer composition according to the present invention can be obtained from the above process for producing the same.

According to the present invention, the nodes preferably have an approximately spherical shape. "Approximately spherical shape" means that the aspect ratio of the nodes is 1 to 2, preferably 1 to 1.5. The "aspect ratio" is the ratio of the maximum length dimension of a node to the minimum length dimension of the node. The maximum and minimum length dimensions can be obtained from an image recorded by scanning electron microscopy (SEM).

The "maximum length dimension" of a rod-like structure / interconnected node is the longest distance between two endpoints (outermost points) of the rod-like structure / interconnected node as displayed in the SEM-image. The "minimum length dimension" of a rod-like structure / interconnected node is the shortest distance between two endpoints of the rod-like structure / interconnected node as displayed in the SEM-image.

According to the present invention, it is preferred that the nodes have an average diameter of 200 to 700 nm, more preferably 200 to 500 nm. The average diameter of the nodes can be determined as follows.

Method for determining the average diameter of the interconnected nodes

From an image recorded by SEM, ten nodes are selected and the maximum length dimension (diameter) thereof is measured. The arithmetic mean value of the ten measurements is taken as the average diameter of the nodes.

The average length and the average diameter of the rod-shaped elements can be determined as described in the following.

Method for determining the average length and average diameter of the rod-shaped elements

From an image recorded by SEM, ten rod-shaped elements are selected and the maximum length dimension of each rod-shaped element is measured and taken as measurements of the length. In addition, the minimum length dimension of each rod-shaped element is measured and taken as measurements of the diameter (width). The corresponding arithmetic mean value of the ten measurements is taken as the average length and average diameter (width) of the rod-shaped elements, respectively.

A preferred upper limit of the average length of the rod-shaped elements is 10 $\mu$m. More preferably, the rod-shaped elements have an average length of at most 5 $\mu$m. Furthermore, the average diameter of the rod-shaped elements is preferably at most 500 nm. More preferably, the average diameter of the rod-shaped elements is at most 400 nm.

According to the present invention, each of the rod-shaped elements preferably has a diameter (width) falling within the range of 40 to 700 nm, preferably 45 to 300 nm. Moreover, it is preferred that each of the rod-shaped elements has a length of at least 500 nm, more preferably at least 750 nm. The diameter of a rod-shaped element is the minimum length dimension of the rod-shaped element taken from a SEM image, and the length of a rod-shaped element is the maximum length dimension of the rod-shaped element taken from a SEM image, as already explained under the above section "Method for determining the average length and average diameter of the rod-shaped elements".

Moreover, each of the rod-shaped elements preferably has an aspect ratio of 3 to 40, preferably 10 to 30. The "aspect ratio" of a rod-shaped element is the ratio of the maximum length dimension of the rod-shaped element to the minimum length dimension of the rod-shaped element. The maximum and minimum length dimensions can be obtained from an image recorded by SEM.

According to the present invention, the porous polymer composition comprises poly(methyl methacrylate).

According to a preferred embodiment, the rod-shaped elements have an average aspect ratio of 5 to 35. Furthermore, the interconnected nodes preferably have an average aspect ratio of at most 1.5, preferably at most 1.3, particularly preferably at most 1.2. It is further preferred that the interconnected nodes have an average aspect ratio of at least 1.1.

The average aspect ratio of the rod-like structures and of the interconnected nodes may be determined as follows.

Method for determining the average aspect ratio of the rod-like structures and the interconnected nodes

From an image recorded by SEM, ten rod-like structures / interconnected nodes are selected and the maximum length dimension as well as the minimum length dimension thereof are measured from the image. The aspect ratio of each of the ten rod-like structures / interconnected nodes is calculated (aspect ratio = maximum length dimension / minimum length dimension). The arithmetic mean value of the ten aspect ratios is taken as the average aspect ratio.

In a further preferred embodiment of the present invention, the porous polymer composition has a polymer filling fraction of 25 to 60%. The polymer composition according to the present invention is porous, that is it includes volume that is taken by the polymer composition as well as volume that is taken by voids. The polymer filling fraction is the ratio of the volume taken by the polymer composition to the entire volume of the porous polymer composition. The entire volume of the porous polymer composition consists of the volume taken by the voids and the volume taken by the polymer composition. The polymer filling fraction can be determined as follows:

Method for determining the polymer filling fraction

The polymer filling fraction can be determined based on a total of five different SEM images by determining the size of all nodes and calculating the respective polymer fraction. This can be done in an automated way by making use of the software "Image J", as described in Syurik et al., Beilstein J. of Nanotechn. 8, 906-914 (2017).

The form of the porous polymer composition according to the present invention is not particularly limited. According to a preferred embodiment, the porous polymer composition is a film, a powder, a granulate or a mixture of these.

Due to the specific microstructure of the porous polymer composition according to the present invention, the composition has excellent scattering properties and a high total reflectance so that it appears in a bright white color. According to a preferred embodiment, the porous polymer composition has a total reflectance of at least 65%, preferably at least 75%, more preferably at least 85% in the visible range of 350 nm to 700 nm. The total reflectance is based on the porous polymer composition in the form of a film having a thickness of 15 $\mu$m. The total reflectance can be determined as described below under section "Optical experimental analysis" and as described in Syurik et al., Sci. Rep. 7, 46637 (2017).

The porous polymer composition according to the present invention has preferably a transport mean free path (lt) of at most 5 $\mu$m, preferably at most 4 $\mu$m, particularly preferably at most 3 $\mu$m.

According to the present invention, the transport mean free path (lt) is the length over which the direction of propagating photons of light is randomized, i.e. the length over which light scatters in different directions. The shorter the lt, the better the scattering properties of a substance. Better scattering properties result in a more intense white color of the porous polymer composition according to the present invention. The transport mean free path (lt) can be determined

as follows.

Method for determining the transport mean free path ($l_t$)

A series of five films, having a respective thickness uniformly distributed between 10 $\mu$m and 100 $\mu$m, preferably having respective thicknesses of 20 $\mu$m, 40 $\mu$m, 60 $\mu$m, 80 $\mu$m 100 $\mu$m, of the porous polymer composition with similar morphologies but with different thicknesses is formed. The values It are obtained from fitting the transmission behavior (T) as function of the thickness (L) using the following equation (1), which is a simplification of the analytical expression in the diffusion approximation for a slab geometry sample for materials with negligible absorption (see A. Ishimaru, Wave Propagation and Scattering in Random Media, Academic Press, New York, USA 1989).

$$T \approx \frac{2ze}{L+2ze} \tag{1}$$

In the above equation (1), $z_e$ is the extrapolation length considering the effect of internal reflections at the film surfaces (see A. Lagendijk, R. Vreeker, P. De Vries, Phys. Lett. A 1989, 136, 81), which is experimentally determined via the angular distribution measurement of the transmitted light and found to be $z_e$ = (1.48 $\pm$ 0.14)·It (see M. U. Vera, P.A. Lemieux, D. J. Durian, JOSA A 1997, 14, 2800).

Alternatively, the transport mean free path (It) can be determined as the slope of the curve connecting the total transmittance values, measured for samples of different thickness, plotted vs. inverse sample's thickness as described in Syurik et al., Sci. Rep. 7, 46637 (2017).

In a further aspect, the present invention relates to an article which includes the porous polymer composition according to the present invention. Since the article includes the porous polymer composition, it appears in white color to the human eye. The porous polymer composition may be dispersed in the article and/or the article may have a surface coated with the porous polymer composition.

In this context, as already noted above, the white color of the porous polymer composition according to the present invention disappears upon wetting with an aqueous liquid. Particularly, when the porous polymer composition is contacted with an aqueous liquid, the composition becomes translucent or transparent. According to the present invention, "transparent" means that a total reflectance of light having a wavelength falling within the range of 350 to 700 nm is at most 10%, preferably at most 5%.

The present invention will be further illustrated in the following examples, without any limitation thereto.

## Examples

Example 1

As-received poly(methyl methacrylate) (PMMA, Topacryl AG, $M_w$ = 1900 kg/mol, $M_n$ = 700 kg/mol) sheets were fully dissolved in acetone (EMSURE®, Merck KGaA, Cas-Nr. 67-64-1, water content < 0.05%) in a concentration of 0.6 g/100 ml. The polymer solution obtained was treated with a horn sonicator (Qsonica Q125, Qsonica LLC) for durations ranging from 30 minutes to 7 hours. The sonication was performed in a closed chamber. The following ultrasonication conditions were used: Frequency: 20 kHz; power rating: 125 W (corresponding to an intensity of 70%). During sonication, the polymer solution was cooled in a bath of iced water while assuring that no water droplets from the bath of iced water were added to the polymer solution. Due to the hygroscopic behavior of acetone, the polymer solution attracts water (i.e. a non-solvent) from the atmosphere during sonication and the subsequent steps. Thus, three component systems consisting of polymer (PMMA), solvent (acetone) and non-solvent (water) were obtained. The water content in the freshly sonicated solutions as measured with Fourier transform infrared spectroscopy (FTIR, Vertex 70, Bruker AXS GmbH) varied between 0.05% and 0.2% and showed no correlation with sonication time. Each of the obtained solutions was cast in a glass beaker having a diameter of 11 cm and left rested to evaporate the solvent. During the evaporation of acetone, the relative water concentration increased and became sufficient for phase separation (precipitation of the polymer composition). The relative humidity during the evaporation step was about 31% and the temperature was 21°C. The evaporation step took about 10 minutes for a solution of 20 ml.

After the complete evaporation of the solvent, the obtained porous polymer films appeared white to the eye. The films of the porous polymer composition were peeled off from the glass beaker. The thus obtained porous polymer films had thicknesses of about 1 $\mu$m to 85 $\mu$m. The respective average thickness was measured as described below.

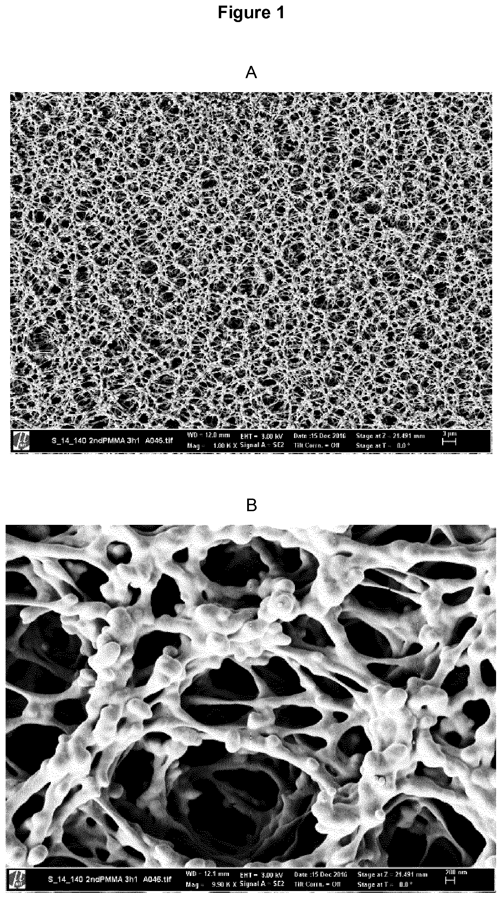

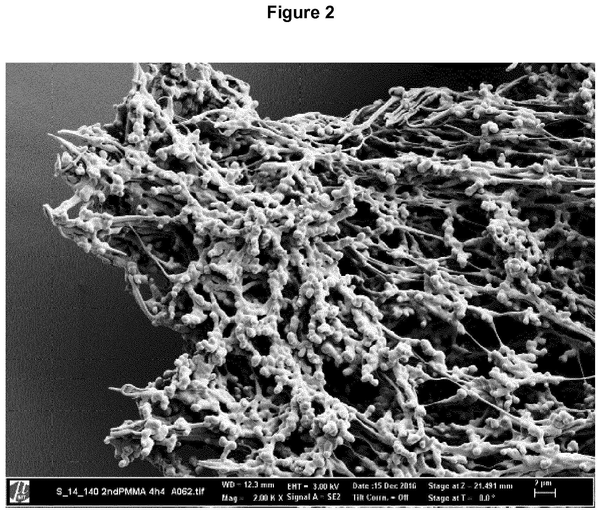

SEM-images of the resulting films from Example 1 are shown in Figures 1A, 1B and 2.

Method for measuring the average thickness of a film of the porous polymer composition

The thickness was measured at five positions for each sample with a measurement apparatus "Incremental Measuring probe MT60M" obtained from the company Heidenhain. The arithmetic average value of the five measurements was taken as the average thickness of the film. The film thicknesses measured in this way were in agreement with the values determined from SEM images of the films' cross sections taken with a scanning electron microscope "SUPRA 60 VP" obtained from the company Zeiss. The surface of interest was spotted with silver for 100 seconds at 125 mA with a Sputter-Coater (K575X, obtained from Emitech) in order to avoid charging effects and ensure a good resolution.

The distribution of macromolecular chains by length in the microporous samples produced with different sonication times as well as $M_w$ and $M_n$ of the respective porous polymer compositions were determined by size exclusion chromatography (SEC, also known as gel permeation chromatography, GPC) using an apparatus "Agilent 1200 Series GPC-SEC System" equipped with columns from Polymer Standards Service (PSS SDV Lux 5 $\mu$m 1000 Å and $10^5$ Å).

Optical experimental analysis

Quantitative optical characterization of the foils/films having different thicknesses was performed with a UV-Vis spectrometer Lambda 1050 obtained from PerkinElmer Inc. In order to suppress reflection at the glass/air interface, the rear side of the substrate (the front side of which was coated with the porous polymer film) was coated with a black absorber. The total (specular + diffuse) reflectance and transmittance spectra were measured in the visible range close to normal incidence (8° for reflection) with an integrating sphere and three locations for each sample. The resulting average spectra were analyzed. A maximum possible spot size of about 10 mm$^2$ was used. All measurements were recorded with unpolarized light and referenced with a standard white spectralon.

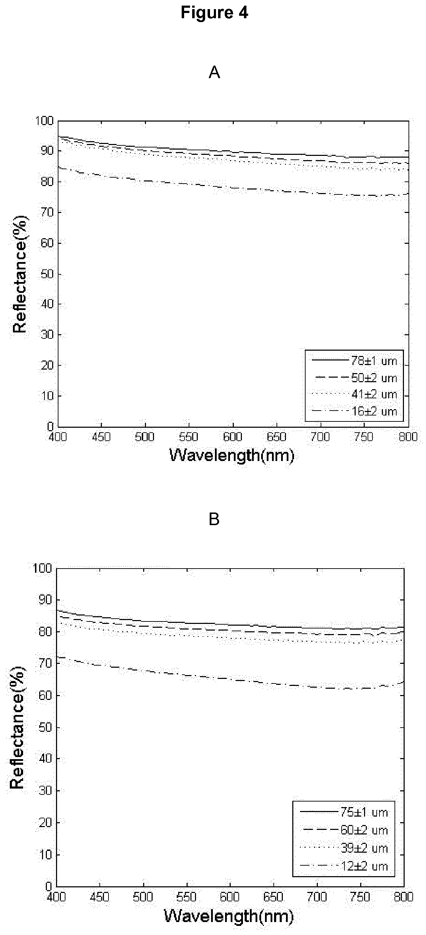

The results of the optical experimental analysis are displayed in Figures 4A and 4B.

Figures 1A and 1B show SEM images of a porous polymer composition based on PMMA of Example 1 (ultrasonication duration: 3 hours) at 1000-fold (Figure 1A) and 9900-fold (Figure 1B) magnification. The obtained porous polymer composition had the following properties: $M_w$ = 137910 g/mol, $M_n$ = 92775 g/mol, D = 1.4865, polymer filling fraction: 49%, Rod-like structures and interconnected nodes can be observed. The rod-like structures had an average diameter of 200 nm at an average aspect ratio of 15. The nodes had an average diameter of 465 nm.

Figure 2 shows an SEM image of a porous polymer composition of Example 1 (ultrasonication duration: 4 hours) at 2000-fold magnification. The obtained porous polymer composition had the following properties: $M_w$ = 121950 g/mol, $M_n$ = 87139 g/mol, D = 1.3995, polymer filling fraction: approximately 30%, Rod-like structures and interconnected nodes can be observed. The rod-like structures had an average diameter of 50 nm at an average aspect ratio of 21.5; and the nodes had an average diameter of 215 nm.

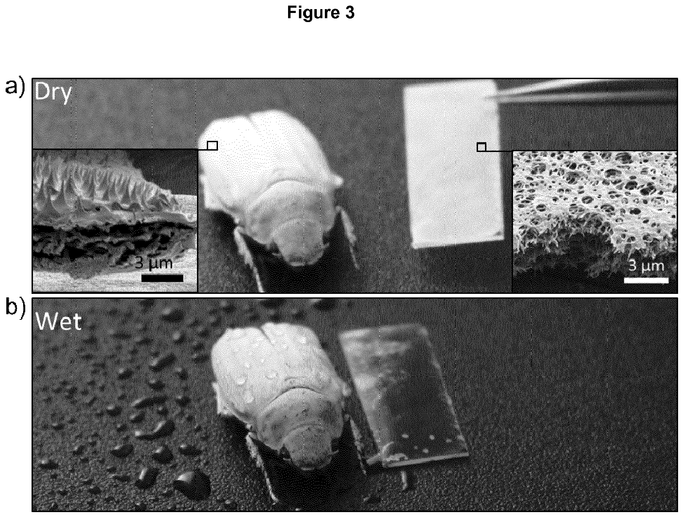

Figure 3 shows the effect of wetting with an aqueous solvent on a polymer composition according to the present invention. In particular, similarly to the *Cyphochilus insulanus* beetle (Figure 3 a) and b), left side), microstructured PMMA films according to the present invention (Figure 3 a) and b), right side) exhibit a bright-white appearance achieved by efficient multiple scattering in the dry state. The film shown is 4 $\mu$m thick and was obtained from a solution of PMMA in acetone (0,6g PMMA/100 ml acetone) which was cast on a transparent PMMA substrate. As shown in Figure 3 b), due to the pores on the surface of the PMMA film, water can penetrate into the structure, thereby rendering the film transparent upon wetting. Upon redrying, the film's original properties can be restored, i.e. the film turns white again.

Figures 4A and 4B show the total reflectance of films from porous polymer compositions of Example 1 (sonication duration 3 hours (Figure 4A) and 4 hours (Figure 4B)) with various thicknesses as a function of wavelength. The thicknesses of the films are indicated in the legend.

**Claims**

**1.** A process for producing a porous polymer composition, comprising the steps of

(A) providing a substrate;
(B) preparing a polymer solution containing a polymer composition, a solvent, and optionally a non-solvent, wherein the polymer composition has

a weight average molecular weight $M_w$ determined by size exclusion chromatography as specified in the description of 80 to 400 kg/mol,
a number average molecular weight $M_n$ determined by size exclusion as specified in the description chromatography of 60 to 200 kg/mol, and

a polydispersity index D ($D=M_w/M_n$) of 1.1 to 2; and

(C) forming a film of the polymer solution on the substrate; and
(D) evaporating the solvent from the film of the polymer solution, thereby obtaining the porous polymer composition,

wherein the polymer composition comprises poly(methyl methacrylate).

2. The process according to claim 1,
wherein step (B) comprises the steps of

(B1) preparing a raw polymer solution of a raw polymer composition by dissolving the raw polymer composition in the solvent;
(B2) ultrasonicating the raw polymer solution, and optionally
(B3) adding the non-solvent to the ultrasonicated raw polymer solution, thereby obtaining the polymer solution.

3. The process according to claim 2,
wherein ultrasonicating in step (B2) is carried out at a frequency falling within the range of 10 to 40 kHz and for a duration of 1 to 7 hours.

4. The process according to claim 2 or 3,
wherein step (B2) is carried out at a temperature of 0 to 15°C.

5. A porous polymer composition obtained from the method according to any one of claims 1 to 4,
wherein the porous polymer composition comprises poly(methyl methacrylate).

6. A porous polymer composition having a microstructure comprising a plurality of interconnected nodes which have an average diameter of 150 to 1000 nm and a plurality of rod-shaped elements which have an average diameter of at least 40 nm and an average length of at least 700 nm,
wherein the porous polymer composition comprises poly(methyl methacrylate) and wherein the average diameter is measured as specified in the description

7. The porous polymer composition according to claim 5 or 6,
wherein the rod-shaped elements have an average aspect ratio of 5 to 35.

8. The porous polymer composition according to any one of claims 5 to 7,
wherein the porous polymer composition has a polymer filling fraction of 25 to 60%.

9. The porous polymer composition according to any one of claims 5 to 8,
wherein the porous polymer composition is a film, a powder, a granulate or a mixture of these.

10. The porous polymer composition according to any one of claims 5 to 9,
wherein the porous polymer composition has a total reflectance of at least 65% and the total reflectance is determined based on the porous polymer composition in the form of a film having a thickness of 15 $\mu$m.

11. An article including the porous polymer composition according to any one of claims 5 to 10.

12. The article according to claim 11, wherein
the porous polymer composition is dispersed in the article, and/or
the article has a surface coated with the porous polymer composition.

13. Use of the porous polymer composition according to any one of claims 5 to 10 for coloring.

**Patentansprüche**

1. Verfahren zur Herstellung einer porösen Polymerzusammensetzung, umfassend die Schritte

(A) Bereitstellen eines Substrats;

(B) Herstellen einer Polymerlösung, enthaltend eine Polymerzusammensetzung, ein Lösungsmittel und gegebenenfalls ein Nicht-Lösungsmittel, wobei die Polymerzusammensetzung ein gewichtsmittleres Molekulargewicht Mw, bestimmt durch Größenausschlußchromatographie, wie in der Beschreibung angegeben, von 80 bis 400 kg/mol,

ein zahlenmittleres Molekulargewicht Mn, bestimmt durch Größenausschlußchromatographie, wie in der Beschreibung angegeben, von 60 bis 200 kg/mol und einen Polydispersitätsindex D ($D=M_w/M_n$) von 1,1 bis 2 aufweist, und

(C) Bilden eines Films der Polymerlösung auf dem Substrat, und

(D) Verdampfen des Lösungsmittels von dem Film der Polymerlösung, wodurch die poröse Polymerzusammensetzung erhalten wird,

wobei die Polymerzusammensetzung Poly(methylmethacrylat) umfaßt.

2. Verfahren gemäß Anspruch 1,
   wobei der Schritt (B) die Schritte

   (B1) des Herstellens einer Ausgangspolymerlösung einer Ausgangspolymerzusammensetzung durch Lösen der Ausgangspolymerzusammensetzung in dem Lösungsmittel,
   (B2) des Ultraschallbehandelns der Ausgangspolymerlösung und gegebenenfalls
   (B3) des Zugebens des Nicht-Lösungsmittels zu der ultraschallbehandelten Ausgangspolymerlösung, wodurch die Polymerlösung erhalten wird, umfaßt.

3. Verfahren gemäß Anspruch 2,
   wobei das Ultraschallbehandeln in Schritt (B2) bei einer Frequenz im Bereich von 10 bis 40 kHz und für eine Zeitdauer von 1 bis 7 Stunden durchgeführt wird.

4. Verfahren gemäß Anspruch 2 oder 3,
   wobei der Schritt (B2) bei einer Temperatur von 0 bis 15°C durchgeführt wird.

5. Poröse Polymerzusammensetzung, erhalten durch das Verfahren gemäß einem der Ansprüche 1 bis 4, wobei die poröse Polymerzusammensetzung Poly(methylmethacrylat) umfaßt.

6. Poröse Polymerzusammensetzung mit einer Mikrostruktur, umfassend eine Vielzahl von miteinander verbundenen Knoten, welche einen durchschnittlichen Durchmesser von 150 bis 1000 nm aufweisen, und eine Vielzahl von stabförmigen Elementen, welche einen mittleren Durchmesser von mindestens 40 nm und eine mittlere Länge von mindestens 700 nm aufweisen,
   wobei die poröse Polymerzusammensetzung Poly(methylmethacrylat) umfaßt und wobei der durchschnittliche Durchmesser wie in der Beschreibung angegeben gemessen wird.

7. Poröse Polymerzusammensetzung gemäß Anspruch 5 oder 6, wobei die stabförmigen Elemente ein durchschnittliches Aspektverhältnis von 5 bis 35 aufweisen.

8. Poröse Polymerzusammensetzung gemäß einem der Ansprüche 5 bis 7, wobei die poröse Polymerzusammensetzung eine Polymerfüllfraktion von 25 bis 60% aufweist.

9. Poröse Polymerzusammensetzung gemäß einem der Ansprüche 5 bis 8, wobei die poröse Polymerzusammensetzung ein Film, ein Pulver, ein Granulat oder ein Gemisch von diesen ist.

10. Poröse Polymerzusammensetzung gemäß einem der Ansprüche 5 bis 7, wobei die poröse Polymerzusammensetzung ein Gesamtreflektionsvermögen von mindestens 65% aufweist und das Gesamtreflektionsvermögen basierend auf der porösen Polymerzusammensetzung in der Form eines Films mit einer Dicke von 15 $\mu$m bestimmt wird.

11. Gegenstand, welcher die poröse Polymerzusammensetzung gemäß einem der Ansprüche 5 bis 10 einschließt.

12. Gegenstand gemäß Anspruch 11, wobei die poröse Polymerzusammensetzung in dem Gegenstand dispergiert ist, und/oder der Gegenstand eine Oberfläche aufweist, beschichtet mit der porösen Polymerzusammensetzung.

**13.** Verwendung der porösen Polymerzusammensetzung gemäß einem der Ansprüche 5 bis 10 zum Färben.


**Revendications**

**1.** Procédé de production d'une composition de polymère poreux, comprenant les étapes de:

(A) fournir un substrat;
(B) préparer une solution de polymère contenant une composition de polymère, un solvant et optionnellement un non-solvant, dans lequel la composition de polymère

présente un poids moléculaire moyen en poids $M_w$ déterminé par chromatographie d'exclusion suivant la taille de 80 à 400 kg/mole, comme spécifié dans la description,
le poids moléculaire moyen en nombre $M_n$ déterminé par chromatographie d'exclusion suivant la taille de 60 à 200 kg/mole, comme spécifié dans la description, et
un indice de polydispersité D ($D=M_w/M_n$) de 1,1 à 2; et

(C) former un film de la solution de polymère sur le substrat; et
(D) évaporer le solvant du film de la solution de polymère, et l'on obtient ainsi la composition de polymère poreux,

dans lequel la composition de polymère comprend du poly(méthacrylate de méthyle).

**2.** Procédé selon la revendication 1,
dans lequel l'étape (B) comprend les étapes de:

(B1) préparer une solution brute de polymère d'une composition brute de polymère par dissolution de la composition brute de polymère dans le solvant;
(B2) traiter par ultrasons la solution brute de polymère, et optionnellement
(B3) ajouter le non-solvant à la solution brute de polymère traitée par ultrasons, et l'on obtient ainsi la solution de polymère.

**3.** Procédé selon la revendication 2,
dans lequel le traitement par ultrasons à l'étape (B2) est réalisée à une fréquence tombant dans la plage des 10 à 40 kHz et pour une durée allant de 1 à 7 heures.

**4.** Procédé selon la revendication 2 ou 3,
dans lequel l'étape (B2) est réalisée à une température allant de 0 à 15°C.

**5.** Composition de polymère poreux qu'on obtient par le procédé selon l'une quelconque des revendications 1 à 4,
dans laquelle la composition de polymère poreux comprend du poly(méthacrylate de méthyle).

**6.** Composition de polymère poreux présentant une microstructure comprenant une pluralité de nœuds interconnectés qui présentent un diamètre moyen de 150 à 1000 nm et une pluralité d'éléments en bâtonnets présentant un diamètre moyen d'au moins 40 nm et une longueur moyenne d'au moins 700 nm,
dans laquelle la composition de polymère poreux comprend du poly(méthacrylate de méthyle)
et dans laquelle le diamètre moyen est mesuré comme spécifié dans la description.

**7.** Composition de polymère poreux selon la revendication 5 ou 6,
dans laquelle les éléments en bâtonnets présentent un rapport de forme moyen allant de 5 à 35.

**8.** Composition de polymère poreux selon l'une quelconque des revendications 5 à 7, dans laquelle la composition de polymère poreux a une fraction de remplissage de polymère allant de 25 à 60%.

**9.** Composition de polymère poreux selon l'une quelconque des revendications 5 à 8, dans laquelle la composition de polymère poreux est un film, une poudre, un granulé ou un mélange de ceux-ci.

**10.** Composition de polymère poreux selon l'une quelconque des revendications 5 à 9, dans laquelle la composition de polymère poreux présente une réflectance totale d'au moins 65% et la réflectance totale est déterminée sur base de la composition de polymère poreux sous la forme d'un film d'une épaisseur de 15 pm.

11. Article comprenant la composition de polymère poreux selon l'une quelconque des revendications 5 à 10.

12. Article selon la revendication 11,
dans lequel la composition de polymère poreux est dispersée dans l'article, et/ou l'article présente une surface revêtue de la composition de polymère poreux.

13. Utilisation de la composition de polymère poreux selon l'une quelconque des revendications 5 à 10 à des fins de coloration.

# Figure 1

A

B

Figure 2

**Figure 3**

# Figure 4

A

B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SYURIK et al.** *Beilstein J. of Nanotechn.,* 2017, vol. 8, 906-914
- **SYURIK et al.** *Sci. Rep.,* 2017, vol. 7, 46637
- **A. ISHIMARU.** Wave Propagation and Scattering in Random Media. Academic Press, 1989
- **A. LAGENDIJK ; R. VREEKER ; P. DE VRIES.** *Phys. Lett. A,* 1989, vol. 136, 81
- **M. U. VERA ; P.A. LEMIEUX ; D. J. DURIAN.** *JOSA A,* 1997, vol. 14, 2800